(19) Europäisches Patentamt / European Patent Office / Office européen des brevets

(11) **EP 4 126 566 B1**

(12) **FASCICULE DE BREVET EUROPEEN**

(45) Date de publication et mention
de la délivrance du brevet:
**13.12.2023 Bulletin 2023/50**

(21) Numéro de dépôt: **21717149.5**

(22) Date de dépôt: **23.03.2021**

(51) Classification Internationale des Brevets (IPC):
**B60C 11/03** *(2006.01)*     **B60C 11/13** *(2006.01)*
**B60C 11/12** *(2006.01)*

(52) Classification Coopérative des Brevets (CPC):
**B60C 11/0318; B60C 11/0302; B60C 11/033;
B60C 11/12; B60C 11/1392;** B60C 2011/0313;
B60C 2011/129; B60C 2011/1295

(86) Numéro de dépôt international:
**PCT/FR2021/050488**

(87) Numéro de publication internationale:
**WO 2021/191552 (30.09.2021 Gazette 2021/39)**

(54) **PNEUMATIQUE COMPORTANT UNE BANDE DE ROULEMENT OPTIMISÉE EN ADHÉRENCE SUR SOL ENNEIGÉ**

REIFEN MIT EINER LAUFFLÄCHE MIT OPTIMIERTER GRIFFIGKEIT AUF SCHNEEBEDECKTEM GRUND

TYRE COMPRISING A TREAD OPTIMIZED FOR GRIP ON SNOW-COVERED GROUND

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.03.2020 FR 2002960**

(43) Date de publication de la demande:
**08.02.2023 Bulletin 2023/06**

(73) Titulaire: **COMPAGNIE GENERALE DES
ETABLISSEMENTS MICHELIN
63000 Clermont-Ferrand (FR)**

(72) Inventeur: **BOISDON, Bertrand
63040 CLERMONT-FERRAND CEDEX 9 (FR)**

(74) Mandataire: **M.F.P. Michelin
DCJ/PI - F35 - Ladoux
23 place des Carmes-Déchaux
63040 Clermont-Ferrand Cedex 9 (FR)**

(56) Documents cités:
**WO-A1-2015/096963      WO-A1-2016/134991
WO-A1-2019/123277      DE-A1-102017 203 221**

## Description

### Domaine technique

La présente invention concerne un pneumatique pour véhicule automobile dit pneumatique "quatre saisons". L'invention est plus particulièrement adaptée pour un pneumatique radial destiné à équiper un véhicule de tourisme ou une camionnette.

### Définitions

Dans ce qui suit, les directions circonférentielle, axiale et radiale désignent respectivement une direction tangente à tout cercle centré sur l'axe de rotation du pneumatique, une direction parallèle à l'axe de rotation du pneumatique et une direction perpendiculaire à l'axe de rotation du pneumatique.

Par convention, un repère (O, XX', YY', ZZ'), dont le centre O coïncide avec le centre du pneumatique, les directions circonférentielles XX', axiale YY', et radiale ZZ' désignent respectivement une direction tangente à la surface de roulement du pneumatique selon le sens de rotation, une direction parallèle à l'axe de rotation du pneumatique, et une direction orthogonale à l'axe de rotation du pneumatique.

Par radialement intérieur, respectivement radialement extérieur, on entend plus proche, respectivement plus éloigné de l'axe de rotation du pneumatique.

Par axialement intérieur, respectivement axialement extérieur, on entend plus proche, respectivement plus éloigné du plan équatorial du pneumatique, le plan équatorial du pneumatique étant le plan passant par le milieu de la bande de roulement du pneumatique et perpendiculaire à l'axe de rotation du pneumatique.

Un pneumatique comprend un sommet, destinée à venir en contact avec un sol par l'intermédiaire d'une bande de roulement, dont les deux extrémités axiales sont reliées par l'intermédiaire de deux flancs à deux bourrelets assurant la liaison mécanique entre le pneumatique et la jante sur laquelle il est destiné à être monté.

De façon générale, l'homme du métier définit la bande de roulement d'un pneumatique principalement à l'aide des caractéristiques de conception suivantes : la surface de roulement permettant de définir la largeur totale de la bande de roulement, et la sculpture caractérisée par un taux d'entaillement volumique.

Par « surface de roulement » de bande de roulement, on entend la surface qui regroupe l'ensemble des points du pneumatique qui vont entrer en contact avec un sol dans des conditions usuelles de roulage. Ces points qui vont entrer en contact avec le sol appartiennent aux faces de contact des blocs. Pour un pneumatique, les « conditions usuelles » de roulage sont les conditions d'utilisation définies par la norme ETRTO (European Tyre and Rim Technical Organisation). Ces conditions d'utilisation précisent la pression de gonflage de référence correspondant à la capacité de charge du pneu indiquée par son indice de charge et à son code vitesse. Ces conditions d'utilisation peuvent aussi être dites « conditions nominales » ou « conditions d'usage ».

La largeur totale de la bande de roulement est la distance axiale entre les extrémités axiales de la surface de roulement, symétriques par rapport au plan équatorial du pneumatique. Sur un plan pratique, une extrémité axiale de la surface de roulement ne correspond pas nécessairement à un point clairement défini. Sachant que la bande de roulement est délimitée extérieurement, d'une part, par la surface de roulement et, d'autre part, par deux surfaces de raccordement avec deux flancs reliant ladite bande de roulement à deux bourrelets destinés à assurer la liaison avec une jante de montage, une extrémité axiale peut être alors définie mathématiquement comme la projection orthogonale, sur la bande de roulement, d'un point théorique d'intersection entre la tangente à la surface de roulement, dans la zone d'extrémité axiale de la surface de roulement, et la tangente à la surface de raccordement, dans la zone d'extrémité radialement extérieure de la surface de raccordement. La largeur totale de la bande de roulement correspond sensiblement à la largeur axiale de la surface de contact lorsque que le pneumatique est soumis aux conditions de charge et de pression recommandées.

La bande de roulement est généralement constituée par la répétition d'éléments volumiques en relief appelés motifs de sculpture dans la direction circonférentielle qui sont séparés les uns des autres par des découpures. Les motifs de sculpture plus particulièrement pris en compte dans le cadre de l'invention sont organisés en au moins deux rangées circonférentielles symétriques par rapport au plan équatorial passant par le centre de la bande de roulement, puis décalées angulairement par une rotation d'une rangée par rapport à l'autre autour de l'axe de rotation du pneumatique.

Chaque motif de sculpture comprend donc deux demi-motifs symétriques par rapport au plan équatorial, et décalés d'une distance d'environ 12 mm à 17 mm dans la direction circonférentielle. Chaque demi-motif de sculpture s'étend axialement entre un bord de la bande de roulement jusqu'au centre de la bande de roulement avec une courbure dans la direction axiale dont l'orientation détermine le sens de rotation du pneumatique. A ce motif est associé un pas de répétition, appelé pas du motif.

Le pas d'un motif de sculpture est la distance mesurée sur une circonférence du pneumatique entre un point de ce motif et l'image translatée de ce point sur le motif immédiatement suivant.

Une bande de roulement avec un seul motif de sculpture est dite mono-pas. Mais en général, la bande de roulement d'un pneumatique pour véhicule de tourisme est généralement constituée par une distribution circonférentielle de deux ou trois motifs de sculpture avec une longueur des pas comprise entre 20 mm et 40 mm.

Les motifs de la sculpture de la bande de roulement sont entaillés par des découpures qui peuvent être des rainures, des incisions, ou des « grains d'orge ».

Par « rainure », on entend une découpure ou entaille dont la distance entre les parois de matière qui délimitent ladite rainure est supérieure à 2 mm et dont la profondeur est supérieure ou égale à 1 mm.

Par « incision », on entend une découpure ou entaille dont la distance entre les parois de matière qui délimitent ladite incision est inférieure ou égale à 2 mm et dont la profondeur est supérieure ou égale à 1 mm.

La densité d'incision SD, correspond au rapport entre une somme des longueurs projetées (lpyi) des incisions selon une direction axiale (Y) sur le produit du pas P du motif de sculpture et de la largeur (W) de la bande de roulement, l'ensemble étant multiplié par 1000, tel que $SD = \frac{\sum_{i=1}^{n} lpyi}{P*W} * 1000$ , avec n le nombre d'incisions dans le motif de sculpture et lpyi la longueur projetée de la ième incision.

Pour les pneumatiques "toute saison" considérés par l'invention, à l'état neuf, la densité d'incision SD dans chacun des motifs de sculpture est au moins égale à 10 mm$^{-1}$ et au plus égale à 70 mm$^{-1}$.

Les autres types de découpures, généralement appelées « grains d'orge », sont des entailles dont la profondeur est inférieure à 1 mm.

Le taux d'entaillement volumique de la bande de roulement est défini comme le rapport entre le volume total des rainures séparant les éléments en relief et le volume total de la bande de roulement supposée non entaillée, radialement compris entre la surface de fond et la surface de roulement. La surface de fond est définie comme la surface translatée de la surface de roulement, radialement vers l'intérieur, sur une distance radiale correspondant à la profondeur radiale maximale des rainures, appelée hauteur radiale Hmax de la bande de roulement. Le taux d'entaillement volumique définit ainsi implicitement le volume de matériau élastomérique constitutif de la bande de roulement destiné à être usé. Il a également une incidence directe sur la surface de contact de la bande de roulement avec le sol et, par conséquent, sur les pressions de contact avec le sol qui conditionnent l'usure du pneumatique.

Chaque motif de sculpture est un élément volumique en relief présentant une face d'attaque qui est la face entrant la première dans l'aire de contact lors du passage du pneumatique sur un sol. L'arête de la face d'attaque radialement extérieure est ci-après désignée arête d'attaque. Chaque motif comprend également une face de fuite qui est la face dont l'arête radialement extérieure sort la dernière de l'aire de contact du pneumatique en roulage sur un sol, ladite arête de la face de fuite radialement extérieure étant ci-après désignée arête de fuite.

L'arête est dite chanfreinée si elle comprend un chanfrein, autrement dit, l'arête se présente comme si elle avait été rabotée pour être remplacée par une surface plane rectangulaire positionnée donc entre la face de contact de la surface de roulement et l'une des faces adjacentes de l'élément de volume considéré.

Un chanfrein d'arête est donc une surface de raccordement le plus souvent plane inclinée dans la direction du creux à l'avant du motif de sculpture selon le sens de roulage du pneumatique.

Le choix du matériau constitutif de la bande de roulement est une étape essentielle de la conception d'un pneumatique. Généralement, c'est un matériau élastomérique caractérisé par ses propriétés dynamiques, telles que sa température de transition vitreuse et/ou son module complexe de cisaillement dynamique G*.

La température de transition vitreuse est une caractéristique physique usuelle d'un matériau élastomérique, qui correspond à la température à laquelle le matériau passe d'un état caoutchouteux à un état rigide vitreux.

La température de transition vitreuse Tg d'un mélange élastomérique est généralement déterminée lors de la mesure des propriétés dynamiques du mélange élastomérique, sur un viscoanalyseur (Metravib VA4000), selon la norme ASTM D 5992-96. La mesure des propriétés dynamiques est réalisée sur un échantillon de mélange élastomérique vulcanisé, c'est-à-dire cuit jusqu'à un taux de conversion d'au moins 90%, l'échantillon ayant la forme d'une éprouvette cylindrique ayant une épaisseur égale à 2 mm et une section égale à 78,5 mm$^2$. On enregistre la réponse de l'échantillon de mélange élastomérique à une sollicitation sinusoïdale en cisaillement simple alterné, ayant une amplitude crête-crête égale à 0,7 MPa et une fréquence égale à 10 Hz. On effectue un balayage en température à vitesse de montée en température constante de +1.5°C/min. Les résultats exploités sont généralement le module complexe de cisaillement dynamique G*, comprenant une partie élastique G' et une partie visqueuse G", et la perte dynamique tgδ, égale au rapport G"/G'. La température de transition vitreuse Tg est la température à laquelle la perte dynamique tgδ atteint un maximum lors du balayage en température. La valeur de G* mesurée à 60°C est représentative de la rigidité du matériau caoutchoutique, c'est-à-dire de sa résistance à la déformation élastique.

**Technique antérieure**

De manière connue, un pneumatique dit "quatre saisons" pour un véhicule de tourisme, est un pneumatique qui présente un compromis d'adhérence sur sol enneigé et sur sol mouillé tout en préservant les performances sur sol sec. Ces pneumatiques ont pour objectif de rouler en sécurité toute l'année quelle que soit la météo. Ils ont généralement reçu la certification réglementaire hiver 3PMSF ( Peaks Mountain Snow Flake), selon les règlements relatifs à la sécurité des pneumatiques tels que les règlements R30 et R117 de l'UNECE, (Organisation des Nations Unies pour le Comité Economique Européen) attestant de leurs bonnes performances en adhérence sur sol enneigé et sur sol mouillé. Cette certification est notamment indiquée sur l'un ou les deux flancs de ces types de pneumatiques.

Le document WO2016/134988 divulgue un pneumatique "quatre saisons" présentant une bande de roulement comportant deux bords et un centre. Ladite bande de roulement est directionnelle et elle comporte plusieurs motifs de sculpture en matériau caoutchoutique. Plus particulièrement, chaque motif de sculpture présente une zone centrale s'étendant globalement selon un angle β1, ledit angle β1 étant au moins supérieur à 35 degrés et au plus inférieur à 65 degrés avec une direction axiale. Chaque motif de sculpture comporte également une zone de bord s'étendant globalement selon un angle β3 au moins supérieur à 0 degré et au plus inférieur à 10 degrés avec ladite direction axiale. Enfin, chaque motif de sculpture comporte une zone de jonction entre la zone centrale et la zone de bord du motif, ladite zone de jonction faisant un angle β2 avec ladite direction axiale.

Le document WO2019/123277 divulgue un pneumatique « quatre saisons » comportant aussi plusieurs motifs de sculpture. Chaque motif de sculpture comprend trois portions séparées par des rainures obliques et formant une portion de bord, une portion centrale et une portion intermédiaire entre la portion de bord et la portion centrale. Seule la portion de bord comprend un chanfrein positionné sur une face d'attaque de cette portion de bord.

Le document WO2016134991 A1 montre un pneumatique avec une bande de roulement directionnelle comportant des blocs incurvés pourvus de chanfreins.

Il existe un besoin constant d'améliorer les performances des pneumatiques « quatre saisons » tant sur le compromis d'adhérence entre un sol sec, un sol enneigé et un sol mouillé que pour le bruit de roulement.

Les inventeurs se sont donnés pour objectif d'améliorer le compromis d'adhérence sur sol enneigé sans dégrader les autres performances telle que l'adhérence sur sol mouillé, sur sol sec, et bruit de roulement pour un pneumatique « quatre saisons », essentiellement pour véhicule de tourisme et camionnette.

**Exposé de l'invention**

Ce but a été atteint selon l'invention par un pneumatique selon la revendication 1.

Le principe de l'invention est de chanfreiner les arêtes d'attaque des motifs de la sculpture de la bande de roulement qui est constituée par la distribution circonférentielle d'au moins deux motifs, MA et MB selon des pas respectifs (PA, PB). L'invention établit la corrélation entre les pas de sculpture et les largeurs de chanfreins des arêtes d'attaque des motifs de sculpture de la bande de roulement.

Selon l'invention, dans les portions Z1 et/ou Z2, et/ou Z3, les largeurs des chanfreins des arêtes d'attaque ( $LC_i^A$, $LC_i^B$, i allant de 1, à 3) des demi-motifs (MA1, MA2) et (MB1, MB2) de pas respectifs (PA, PB) vérifient les inégalités suivantes :

a) pour la portion Z1 :

$$0.8 * \frac{PA}{PB} \leq \frac{LC_1^A}{LC_1^B} \leq \frac{PA}{PB} * 1.2$$

b) pour la portion Z2 :

$$0.8 * \frac{PA}{PB} \leq \frac{LC_2^A}{LC_2^B} \leq \frac{PA}{PB} * 1.2$$

c) pour la portion Z3 .

$$0.8 * \frac{PA}{PB} \leq \frac{LC_3^A}{LC_3^B} \leq \frac{PA}{PB} * 1.2$$

Chaque demi-motif MA1, et son symétrique par rapport au plan équatorial MA2, du motif de sculpture MA est partitionné en trois portions Z1, Z2, Z3, qui ont leurs arêtes d'attaque chanfreinées, avec des largeurs de chanfreins (

$LC_1^A$, $LC_2^A$, $LC_3^A$ ). De la même façon, les demi motifs (MB1, MB2) du motif de sculpture MB a les arêtes d'attaque chanfreinées avec des largeurs de chanfreins ( $LC_1^B$, $LC_2^B$, $LC_3^B$ ) dans les portions Z1, Z2, et Z3.

Lors de la conception du pneumatique, la succession des motifs de sculpture (MA, MB) est déterminée en cherchant à minimiser le bruit de roulement. A l'issue de cette étape, le nombre de motifs de sculpture MA et MB, ainsi que les pas associés (PA, PB) sont déterminés.

Pour le premier motif de sculpture MA, en fixant une valeur initiale à la largeur du chanfrein dans une portion (Z1, Z2, Z3), en vertu des équations (a, b, c), on en déduit les valeurs possibles de la largeur du chanfrein du deuxième motif de sculpture MB dans la même portion considérée.

A titre d'exemple, considérons une bande de roulement avec une sculpture comprenant un motif MA avec un PA de 23.6 mm, et un motif MB avec un pas PB 27.7 mm, en initialisant $LC_1^A$ à 1.3 mm, on en déduit d'après l'inéquation (a) que $LC_1^B$ est compris dans l'intervalle [1,27mm ; 1,91mm].

Par ailleurs, l'invention propose également d'avoir une densité d'incision suffisante pour chaque motif de sculpture pour parvenir au compromis de performances recherché d'un pneumatique « toute saison », pour les performances d'adhérence sur sols sec et de bruit de roulement.

Encore selon l'invention, la densité d'incision de chaque motif de sculpture (SDA, SDB) est au moins égale à 10 mm$^{-1}$, et au plus égale à 70 mm$^{-1}$.

Chaque motif de sculpture (MA, MB) comprend des demi-motifs (MA1, MA2) et (MB1, MN2). La densité d'incision (SDA, SDB) se comprend comme étant le cumul de chaque demi-motif de sculpture (MA1, MA2) et MB1, MB2).

Préférentiellement, la bande de roulement comprenant un nombre (NA, NB) de motifs de sculpture (MA, MB), la densité moyenne d'incision, SDmoy est au moins égale à 10 mm$^{-1}$, et au plus égale à 70 mm$^{-1}$, avec la densité moyenne d'incision définie par : SDmoy = $\dfrac{SDA*NA*PA+SDB*NB*PB}{NA*PA+NB*PB}$ , avec (SDA, SDB) densités d'incision des motifs de sculpture (MA, MB).

Chaque motif de sculpture (MA, MB), est entaillé avec des incisions de manière à obtenir une densité (SDA, SDB) au moins égale à 10 mm$^{-1}$, et au plus égale à 70 mm$^{-1}$, ce qui garantit une densité moyenne d'incision au tour de roue dans la même fourchette.

Pour l'adhérence sur sol mouillé, les densités d'incision (SDA, SDB) des motifs de sculpture favorisent le mouvement de flexion de motifs de sculpture et génère ainsi des surpressions sur le bord d'attaque. Des densités d'incision (SDA, SDB) pour chacun des motifs de sculpture (MA, MB), qui sont égales à au moins 10 mm$^{-1}$ et au plus égale à 70 mm$^{-1}$ permettent de trouver le compromis recherché entre les performances d'adhérence sur sol sec et sur sol mouillé.

L'invention propose également un compromis entre la performance du bruit de roulement, et la performance adhérence sur des sols enneigés ou mouillés où la géométrie des chanfreins est définie de façon corrélée avec les motifs de la sculpture.

On distingue deux grands types d'émergences qui sont causés par l'impact des motifs de sculpture sur la chaussée : le sirènement et le battement. Ce sont des émergences dont la puissance acoustique est très supérieure à la puissance moyenne du spectre et à laquelle l'oreille humaine est particulièrement sensible.

La cadence des impacts de la sculpture sur le sol à l'entrée de l'aire de contact est rythmée par l'ordre de succession des motifs. Si les motifs sont tous de même taille, ils se succèdent à un rythme parfaitement régulier. Une seule fréquence sera alors sollicitée, ce qui produira un son ressemblant à celui d'une "sirène". Disposer de plusieurs tailles de motifs permet de brouiller le signal sonore émis par la sculpture du pneu, c'est-à-dire d'amoindrir les émergences, pour tendre vers un bruit blanc.

La succession des motifs de la bande de roulement est conçue de manière à atténuer le sirènement et le battement. Deux motifs peuvent différer par la largeur, la densité d'incision, et/ou le pas associé.

Préférentiellement, le rapport entre le pas PA du premier motif de sculpture MA formé des demi-motifs (MA1, MA2) divisé par le pas PB du deuxième motif de sculpture MB formé des demi-motifs (MB1, MB2), PA/PB est au moins égal à 0,60 et au plus égal à 0,90.

Encore préférentiellement, le rapport entre le pas PA du premier motif de sculpture MA formé des demi-motifs (MA1, MA2) divisé par le pas PB du deuxième motif de sculpture MB formé des demi-motifs (MB1, MB2), PA/PB est au moins égal à 0,85.

Le rapport PA/PB du pas PA le plus court du premier motif de sculpture divisé par le pas PB le plus long du deuxième motif de sculpture est compris dans l'intervalle [0.6 ; 0.9]. Le plus petit pas et le plus long pas sont dans un rapport idéalement égal à 0.85, ou tout au moins inclus dans l'intervalle [0.6 ; 0.9].

Quand le rapport de pas est inférieur à 0.6, l'écart entre les deux pas devient trop grand et entraine une discontinuité trop importante de l'arrangement des motifs de la sculpture au tour de roue.

Inversement, pour un rapport de pas au-delà de 0.9, la distance entre les motifs de sculpture devient trop faible, la sculpture de la bande de roulement devient proche d'une solution mono pas qui ne donne pas satisfaction quant au niveau de bruit généré.

Avantageusement, les largeurs des chanfreins des arêtes d'attaque ( $LC_1^A$, $LC_2^A$, $LC_3^A$ ) pour le premier motif de sculpture MA, formé des demi motifs (MA1, MA2), et ( $LC_1^B$, $LC_2^B$, $LC_3^B$ ) pour le deuxième motif de sculpture MB, formé des demi motifs (MB1, MB2) des portions respectives (Z1, Z2, Z3) vérifient au moins une des relations suivantes :

a. $LC_1^X$ appartient à l'intervalle [0.5, 2] mm, avec X=A, ou B

b. $LC_2^X$ appartient à l'intervalle [1, 2.5] mm, avec X= A ou B

c. $LC_3^X$ appartient à l'intervalle [1.5, 3] mm, avec X=A, ou B.

D'un point de vue pratique, les motifs et les pas de la bande de roulement sont d'abord déterminés en cherchant à minimiser le bruit de sirènement et de battement. Puis, les ratios des pas des motifs sont utilisés pour déterminer les largeurs des chanfreins des motifs. C'est un processus de conception itératif, qui à convergence conduit au pneumatique de l'invention.

Préférentiellement, la bande de roulement comprenant un troisième motif de sculpture MC formé de deux demi-motifs (MC1, MC2), symétriques par rapport au plan équatorial (C) et de pas PC, avec PB inférieur à PC, le rapport des pas PB/PC est supérieur ou égal au rapport des pas PA/PB.

L'utilisation de trois motifs de sculpture facilite l'atténuation du bruit avec un brouillage plus efficace du signal d'excitation de la sculpture comparativement à une sculpture mono pas ou encore avec seulement deux motifs. Au-delà de trois motifs, le coût de revient industriel du moule en phase de conception et en phase d'utilisation se dégrade significativement.

Les inventeurs ont observé que le pas du troisième motif est lié aux pas précédents dans un rapport de proportionnalité.

Avantageusement, les motifs de la sculpture ont une hauteur radiale Hmax au plus égale à 9 mm, et préférentiellement au plus égale à 7 mm.

Avantageusement, le taux d'entaillement volumique global TEV correspondant au rapport du volume d'entaille VE sur le volume total VT de la bande de roulement, tel que TEV=VE/VT, le taux d'entaillement volumique global TEV de la bande de roulement est compris entre [20%,40%], et préférentiellement entre [25%,35%].

Pour la performance adhérence, le taux d'entaillement a un effet de crémaillère pour favoriser l'accroche du pneumatique dans la neige. Cet effet de crémaillère est amplifié avec une sculpture directionnelle comprenant des découpures. Selon les inventeurs, un taux d'entaillement global TEV compris entre [20%, 40%] et préférentiellement entre [25%, 35%] est nécessaire pour avoir une performance d'adhérence sur neige conforme à l'invention. Le taux d'entaillement volumique définit aussi le volume de matériau élastomérique constitutif de la bande de roulement destiné à être usé. Le taux d'entaillement est donc un paramètre sensible pour la détermination du compromis des performances du pneumatique telles que l'usure, l'adhérence, et le bruit.

Préférentiellement, la bande de roulement comprenant un troisième motif de sculpture MC de pas PC, le taux d'entaillement volumique TEM de chaque motif de sculpture (MA, MB, MC) est sensiblement identique.

Le taux d'entaillement volumique d'un motif de sculpture est défini comme le rapport entre le volume total des découpures comme par exemple les rainures séparant les éléments en relief et le volume total du motif supposé non entaillé, radialement compris entre la surface de fond et la surface de roulement.

Le principe du réglage de la géométrie des motifs de sculpture par un taux d'entaillement est de parvenir à une distribution de la masse de la bande de roulement de façon la plus uniforme possible autour de l'axe de rotation du pneumatique. Le balourd dynamique ou balourd de couple est une gêne causée par une non-uniformité résultant d'une dissymétrie de répartition massique par rapport au centre de rotation du pneumatique sans déplacement du centre de gravité. Cette non-uniformité crée quand le pneumatique est en rotation des forces centrifuges qui forment un couple par rapport au centre l'enveloppe et est à l'origine d'une gêne causée par des vibrations latérales.

La non-uniformité de masse génère aussi un balourd statique résultant d'une dissymétrie de la répartition massique du pneumatique qui correspond à une excentricité du centre de gravité dans le plan de symétrie du pneumatique. Le balourd statique crée quand le pneu est en rotation une force centrifuge qui s'exerce sur le plan de symétrie du pneumatique. Il occasionne des vibrations verticales perçues dans le véhicule.

Avantageusement, la bande de roulement comprenant un troisième motif de sculpture MC de pas PC, le pas maximal des motifs de sculpture parmi le pas (PA) du premier motif (MA), le pas (PB) du deuxième motif (MB) et le pas (PC) du troisième motif (MC) est compris entre 22 mm et 40 mm, préférentiellement entre 23 mm et 36 mm.

Avantageusement, la composition du matériau caoutchoutique de la bande de roulement a une température de transition vitreuse Tg comprise entre -40°C et -10°C et préférentiellement entre -35°C et -15°C et un module complexe de cisaillement dynamique G* mesuré à 60°C compris entre 0,5 MPa et 2 MPa, et préférentiellement entre 0,7 MPa et 1,5 MPa.

L'adhérence du pneumatique sur le sol obéit au moins à deux phénomènes physiques : l'adhésion et l'indentation. Par exemple, pour un sol mouillé, la sculpture de la bande de roulement évacue l'eau du sol pour permettre l'adhésion par collage de la surface de roulement sèche avec le sol. Parallèlement, la souplesse du matériau de la bande de roulement permet d'épouser les aspérités du sol par indentation pour accrocher le pneumatique. Le matériau doit rester souple et efficace à des températures inférieures à 7°C. Selon les inventeurs un matériau élastomérique avec une température de transition vitreuse Tg comprise entre -40°C et -10°C et préférentiellement entre -35°C et -15°C et un module complexe de cisaillement dynamique G* mesuré à 60°C compris entre 0,5 MPa et 2 MPa, et préférentiellement entre 0,7 MPa et 1,5 MPa, confère à la bande de roulement les propriétés physiques adéquates pour répondre aux compromis de performances recherchées.

Avantageusement, au moins 30% des arêtes d'attaque et/ou de fuite et préférentiellement au moins 45% des arêtes d'attaque et/ou de fuite, et plus préférentiellement 100 % des arêtes d'attaque et/ou de fuite ont un chanfrein.

La présence d'un chanfrein sur les arêtes d'attaque entraine une amélioration du freinage sur sols enneigé et mouillé, mais la bande de roulement peut également dans certains modes de réalisation avoir des chanfreins sur les arêtes de fuite qui améliorent l'adhérence sur sol sec.

Encore avantageusement, la bande de roulement comprenant un nombre (NA, NB, NC) de motifs de sculpture (MA, MB, MC), la densité moyenne d'incision, SDmoy est au moins égale à 10 mm$^{-1}$, et au plus égale à 70 mm$^{-1}$, avec

$$SDmoy = \frac{SDA*NA*PA+SDB*NB*PB+SDC*NC*PC}{NA*PA+NB*PB+NC*PC}$$

la densité moyenne d'incision définie par : , avec SDC définie comme étant la densité d'incision du motif MC de la sculpture.

L'ajout d'un troisième motif de sculpture améliore le bruit de roulement. Mais la densité d'arête de ce motif supplémentaire doit être dans la fourchette établie de 10 mm$^{-1}$ et 70 mm$^{-1}$ pour garder le compromis de performances d'adhérence.

Préférentiellement, le pneumatique a une certification 3PMSF (3 Peaks Mountain Snow Flake) indiquée sur au moins un de ses flancs.

La certification 3PMSF est délivrée par les autorités gouvernementales des pays membres de l'UNECE (Organisation des Nations Unies pour le Comité Economique Européen), suite à la réalisation réussie d'un test réglementaire d'adhérence sur neige. Les modalités de ce test sont définies dans les règlements R117 et R30 de l'UNECE conformément à l'accord de Genève pour l'homologation des véhicules et de leurs composants dont les pneumatiques. La réussite à ce test confirme le niveau de performance du pneumatique en freinage ou en traction sur neige. L'apposition du marquage réglementaire 3PMSF sur le flanc du pneu permet d'indiquer aux clients le niveau de performance sur neige officiellement testé.

La présente invention sera mieux comprise à la lecture de la description détaillée de modes de réalisation pris à titre d'exemples nullement limitatifs et illustrés par les dessins annexés sur lesquels :

La figure 1 est une vue de détail d'un demi-motif MA1 de la bande de roulement conforme à l'invention et désignée par la référence générale 1-A, puis trois vues en coupe (EE, FF, GG) pour illustrer les chanfreins réalisés sur les arêtes de fuite.

La figure 2 représente un motif MA complet de la sculpture de la bande de roulement, formé de deux demi-motifs MA1, MA2, symétriques l'un de l'autre dans la symétrie par rapport au plan équatorial ("C") passant par le centre de la bande de roulement.

La figure 3 représente un déroulé de la bande de roulement dans la direction circonférentielle (X) selon un premier mode de réalisation de l'invention, avec deux motifs de sculpture MA et MB. Les motifs de sculpture diffèrent par leur géométrie (largeurs, découpures, pas, ...). Le motif MA est représenté avec des hachures verticales, et le motif MB avec des vaguelettes.

La figure 4 représente un déroulé de la bande de roulement dans la direction circonférentielle (X) selon un deuxième mode de réalisation de l'invention, avec trois motifs de sculpture, MA, MB et MC. Les motifs de sculpture diffèrent par leur géométrie (largeurs, découpures, pas, ...). Le motif MC est représenté par des points noirs sur un fonds blanc.

La figure 5 est un troisième mode de réalisation de l'invention. Il se singularise par rapport à la figure 4 en ce qu'à la fois les arêtes de fuite et d'attaque sont chanfreinés. Les chanfreins des arêtes de fuite sont référencés (61, 62, 63).

La figure 6 est un extrait de la figure 5 qui représente un grossissement d'un motif de sculpture MA (MA1, MA2), avec les arêtes d'attaque et de fuite chanfreinées.

La figure 7 représente l'empreinte au sol d'un pneumatique de l'invention gonflé à sa pression nominale, et soumis à une charge verticale.

La figure 8 est un extrait de la figure 7 centrée sur un motif de sculpture dans l'aire de contact avec les arêtes de d'attaque chanfreinée (51, 52, 53).

Sur les différentes figures, les éléments identiques ou similaires portent les mêmes références. Compte tenu de la symétrie de la bande de roulement, pour la lisibilité des figures, les éléments sont référencés une seul fois tantôt du côté 20G, tantôt du coté 20D.

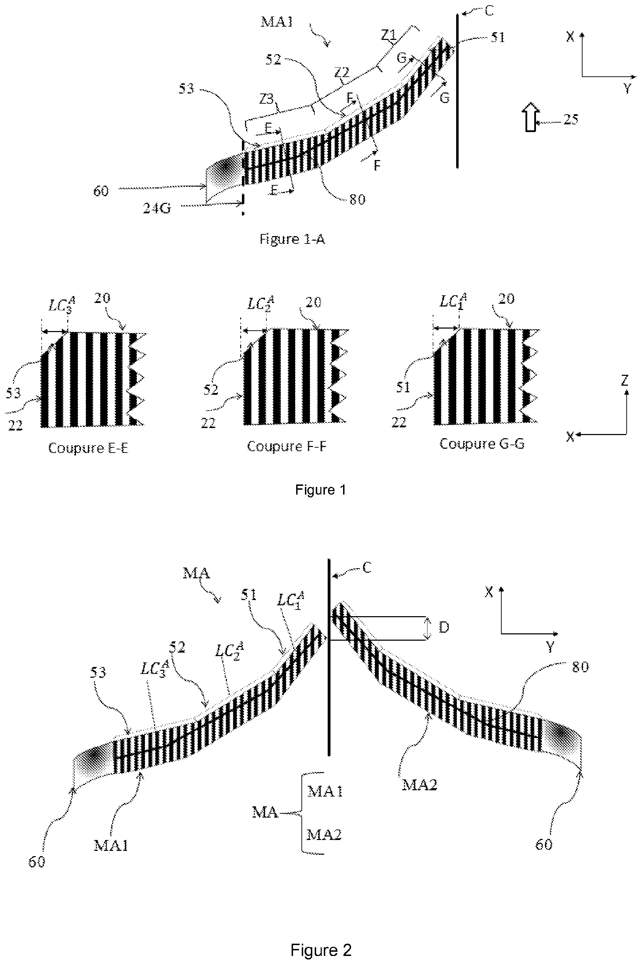

La figure 1 représente un demi-motif de sculpture référencé 1-A, et trois vues en coupe : la vue en coupe EE suivant un plan de coupe dans la portion Z3, FF suivant un plan de coupe dans la portion Z2, et enfin une vue en coupe GG suivant un plan de coupe dans la portion Z1.

Le demi-motif de sculpture MA1 est incurvé depuis une extrémité axiale d'un bord 24G de la bande de roulement jusqu'au centre (C) de la bande de roulement. La concavité du demi motif orientée vers le centre de la bande de roulement (C), détermine le sens de roulage du pneumatique désigné par la référence 25. Le demi-motif de sculpture MA1 comprend une incision 80, qui s'étend axialement depuis un bord (24G, 24D) jusqu'à l'extrémité de MA1 au centre de la bande de roulement.

Le demi-motif MA1 comprend trois portions, une portion (Z3) contiguë au bord 24G de la bande de roulement d'une largeur axiale d'environ un tiers de la largeur totale axiale du demi motif, une portion centrale (Z1) de même largeur axiale que la portion (Z3), et une portion intermédiaire (Z2) contigües aux deux autres portions.

Chaque portion (Z1, Z2, Z3) est un élément volumique présentant une face d'attaque qui est la face dont l'arête radialement extérieure rentre la première dans l'aire de contact lors du passage du pneumatique sur un sol. L'arête de la face d'attaque radialement extérieure est ci-après désignée arête d'attaque.

Chaque portion (Z1, Z2, Z3) est en fin de compte munie d'une arête chanfreinée référencée respectivement (51, 52, 53). Sur les coupes EE, FF, et GG sont représentées les chanfreins des trois portions (Z1, Z2, Z3). Ces chanfreins (51, 52, 53) sont délimités par la face d'attaque 22, et la surface de roulement 20. La largeur d'un chanfrein (51, 52, 53) d'une portion est la distance normale entre la face de fuite et l'arête du chanfrein appartenant à la surface de roulement.

A titre d'illustration la largeur $LC_3^A$ représente la largeur du chanfrein du motif MA dans la portion centrale Z3.

La figure 2 représente un motif de sculpture complet MA comprenant deux demi-motifs (MA1, MA2) symétriques par rapport au plan équatorial ("C") et décalés dans la direction circonférentielle d'une longueur D. La répétition au tour de roue du motif de sculpture MA formé des demi-motifs (MA1, MA2) conduit à une bande de roulement dite directionnelle. La présence d'un seul motif de sculpture MA signifie que la bande de roulement est mono pas.

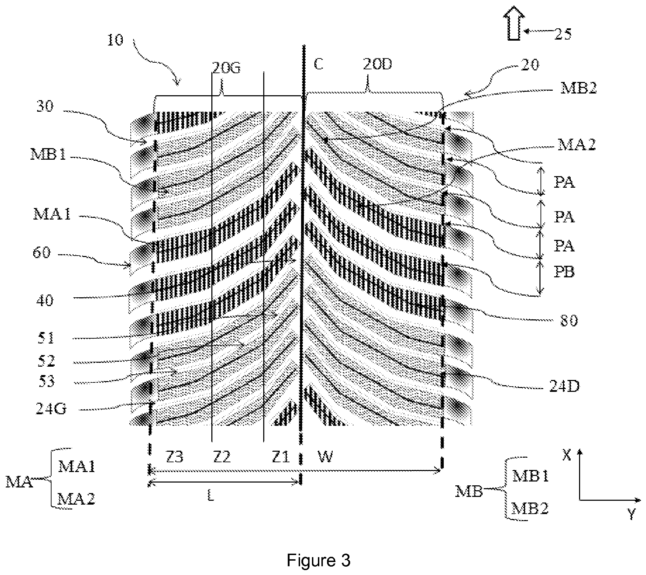

La figure 3 représente un premier mode de réalisation de l'invention avec un déroulé circonférentiel de la bande de roulement 10 du pneumatique qui comprend deux rangées 20G et 20D de demi- motifs symétriques par rapport au plan équatorial C, et décalés dans la direction circonférentielle d'une distance D. Les motifs de sculpture sont séparés au moins en partie par des rainures 30 et s'étendent radialement vers l'extérieur à partir d'une surface de fond 40 jusqu'à la surface de roulement 20 sur une hauteur radiale H.

Chaque motif (MA, MB) est composé de deux demi-motifs (MA1, MA2) et (MB1, MB2) symétriques par rapport au plan équatorial C, de manière à ce que le motif s'étende axialement depuis un premier bord 24G jusqu'à un deuxième bord 24D sur une largeur axiale W. Au motif MA (respectivement MB) est associé un pas de distribution PA (respectivement PB). Le pas d'un motif est la distance mesurée sur une circonférence de la surface de roulement entre un point de ce motif et l'image translatée de ce point sur le motif immédiatement suivant. Les arêtes d'attaque de chaque portion (Z1, Z2, Z3) de chaque motif de la sculpture (MA, MB) sont chanfreinées. Les chanfreins sont référencés respectivement (51, 52, 53) avec des largeurs associées ( $LC_1^A, LC_2^A, LC_3^A$ ) pour le motif MA, et ( $LC_1^B, LC_2^B, LC_3^B$ ) pour le motif MB.

Par « bords » 24G, 24D de la bande de roulement 10 on entend les surfaces délimitant les frontières entre la bande de roulement 10 et les flancs 60. Ces deux bords 24G, 24D sont distants entre eux d'une valeur W correspondant à la largeur de la bande de roulement 10. Ces deux bords 24D, 24G sont situés à une même distance par rapport à un axe central C. Cet axe central C divise la bande de roulement 10 en deux demi-bandes de roulement.

Toujours Sur la figure 3, la sculpture de la bande de roulement comprend un motif MA, représenté avec des hachures verticales et un motif MB représenté avec des vaguelettes. Le nombre de motifs de sculpture distribués dans la direction circonférentielle découle de la minimisation du bruit de roulement émis par le pneumatique en fonction de la géométrie des motifs (largeur, pas, découpures, ...). La bande de roulement représentée à la figure 3 est dite multi-pas avec deux motifs de sculpture MA et MB de pas respectifs PA et PB. Chaque demi motif (MA1, MA2) et (MB1, MB2) des motifs de sculpture (MA, MB) comprend une incision 80 qui s'étend d'un bord (24G, 24G) jusqu'à l'extrémité du demi motif au centre de la bande de roulement.

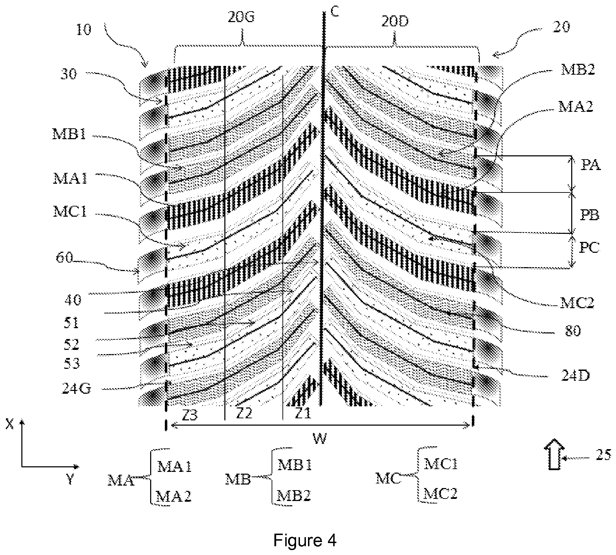

La figure 4 représente un deuxième mode de réalisation de l'invention où la sculpture de la bande de roulement comprend un troisième motif de sculpture MC. Là encore, le motif MC comprend deux demi-motifs (MC1, MC2) symétriques par rapport au plan équatorial C. Ce troisième motif est représenté avec des éléments graphiques en forme de points sur un fonds blanc. Le pas associé à ce motif est PC. Les demi-motifs de MC comprennent également une incision 80. La figure 4 est différente de la figure 3 par l'ajout du motif supplémentaire MC de pas PC.

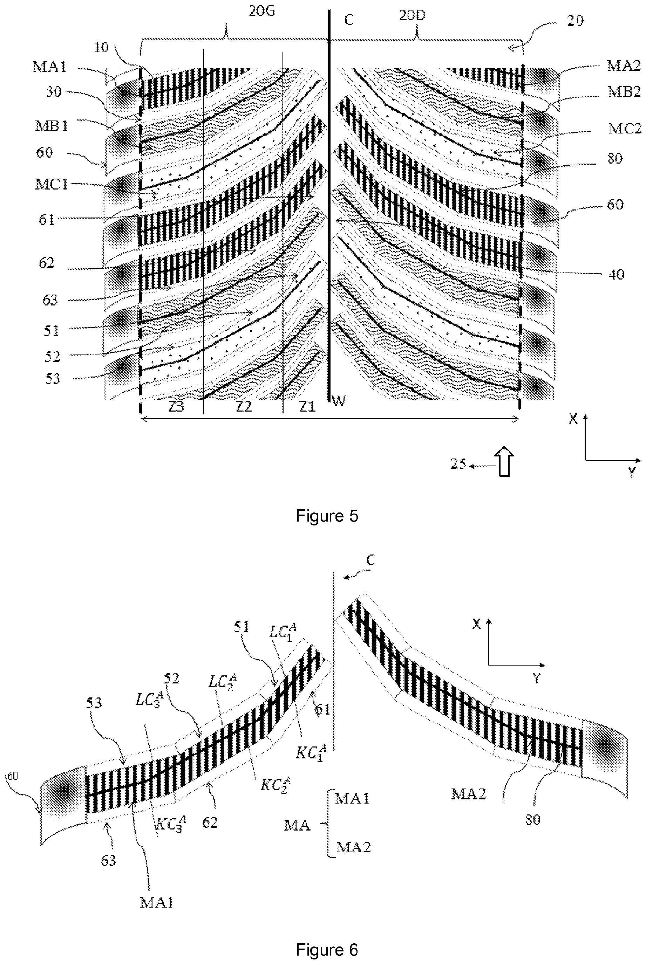

La figure 5 est un troisième mode de réalisation de l'invention. Il se singularise par rapport à la figure 4 en ce que à la fois les arêtes de fuite et d'attaque sont chanfreinées. Les chanfreins des arêtes de fuite sont référencés (61, 62, 63).

La figure 6 est un grossissement d'un motif de sculpture du troisième mode de réalisation de l'invention où les arêtes d'attaque (51, 52, 53) et de fuite (61, 62, 63) sont chanfreinées dans les zones (Z1, Z2, Z3). Les chanfreins des arêtes de fuite ont des largeurs ($KC_1^A, KC_2^A, KC_3^A$) qui n'ont pas nécessairement les mêmes valeurs que les largeurs des chanfreins des arêtes d'attaque.

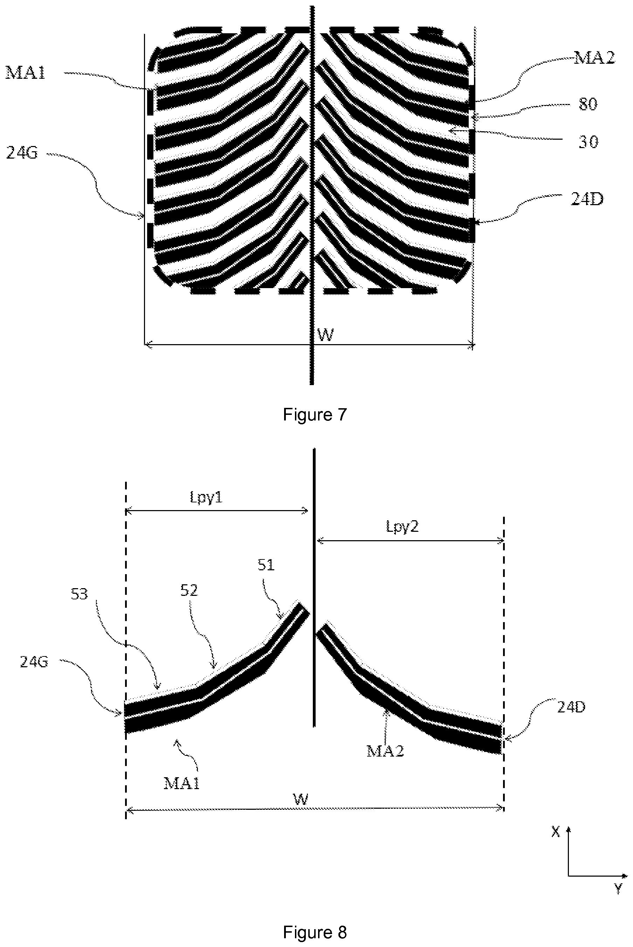

La figure 7 représente l'empreinte au sol d'un pneumatique de l'invention gonflé à sa pression nominale, et soumis à une charge verticale. Le périmètre de l'aire de contact est référencé par la courbe en pointillé. A l'intérieur de ce périmètre, les éléments géométriques à fonds clair représentent les creux de la sculpture de la bande de roulement, rainures 30, et incision 80, et les éléments géométriques sur fonds sombres représentent la surface de matériau en contact avec le sol, constitué des motifs de sculpture. Le pneumatique écrasé par la charge a sa sculpture déformée s'étendant d'un bord 24G à un bord 24D sur une largeur W.

La figure 8 est un extrait de la figure 7 centré sur un motif de sculpture dans l'aire de contact avec les arêtes d'attaque chanfreinées (51, 52, 53). Le demi-motif (MA1, MA2) comprennent des incisions 80 allant du bord (24G, 24D), aux extrémités de (MA1, MA2). Cette figure permet d'illustrer le calcul de la densité d'incision. La projection de l'incision 80 du demi motif MA1 sur la direction axiale est Lpy1, et la projection de l'incision 80 du demi motif MA2 sur la direction axiale est Lpy2. Par définition la densité d'incision SDA, selon la figure 8, est le rapport 1000*(LPy1+LPy2)/(PA*W).

L'invention a été plus particulièrement étudiée pour un pneumatique tourisme de désignation normalisée, selon l'ETRTO (Organisation Technique Européenne pour les Jantes et les Pneumatiques), 205/65 R16 94V. Pour cette dimension une version conforme à l'invention avec trois motifs de sculpture MA, MB, et MC à pas variables respectifs PA, PB, et PC a été réalisée.

Pour optimiser l'arrangement des motifs de manière à diminuer le bruit de sirènement et de battement, à chaque motif de sculpture est associé un signal élémentaire, par exemple sinusoïdale. Pour un tour de roue complet, le signal associé est périodique et résulte de la sommation des signaux élémentaires.

Avec l'aide d'un outil numérique, l'optimisation de l'arrangement initial vis-à-vis du bruit de sirènement et de battement est opérée en procédant à des simulations sur différents arrangements. Par une transformation de Fourier du signal associé à l'arrangement, le spectre du signal est analysé dans le domaine fréquentiel. Les critères d'arrêt du processus d'optimisation sont liés à l'amplitude des émergences de sirènement et de battement, ainsi qu'à leur étalement sur l'axe des fréquences.

A l'issue de cette approche itérative, pour la dimension pneumatique étudiée, la 205/65R16 94V, le nombre total de motifs de la bande de roulement s'établit à 73 sur un tour de roue, arrangés suivant la séquence : MB-MC-MC-MC-MA-MC-MB-MB-MA-MB-MA-MB-MC-MA-MA-MA-MA-MA-MA-MB-MC-MC-MB-MA-MA-MC-MB-MC-MA-MC-MB-MA-MA-MB-MB-MB-MC-MC-MA-MA-MA-MA-MB-MB-MB-MC-MC-MC-MB-MB-MA-MA-MA-MB-MA-MC-MA-MB-MA-MC-MA-MC-MC-MB-MB-MA-MA-MA-MA-MA-MB-MB-MC.

La circonférence du pneumatique est égale à 2017.5 mm, et la largeur de la bande de roulement est de 161 mm. La sculpture de la bande de roulement du pneumatique fabriqué comprend 3 motifs de sculpture (MA, MB, MC) répartis en 30 motifs MA, en 18 motifs MB et enfin en 15 motifs MC.

Le tableau qui suit récapitule les caractéristiques des motifs de sculpture (MA, MB, MC) :

[Tableau 1]

| | Nombre de motifs de sculpture | Largeur normale des motifs (mm) | | | Taux d'entaillement volumique des motifs (%) | Pas des motifs (mm) |
| --- | --- | --- | --- | --- | --- | --- |
| | | Centre Z1 | Intermédiaire Z2 | Bord Z3 | | |
| Motifs MA | 30 | 3,9 | 7,1 | 8,1 | 30,5 | 23,56 |
| Motifs MB | 18 | 4,6 | 8,3 | 9,6 | 30,5 | 27,71 |
| Motifs MC | 15 | 5,6 | 10,1 | 11,4 | 30,5 | 33,66 |

### EP 4 126 566 B1

Chaque motif de sculpture (MA, MB, MC) est formé de deux demi-motifs (MA1, MA2), (MB1, MB2), et (MC1, MC2). Les données du tableau 1 sont consolidées pour le motif de sculpture complet (MA, MB, MC) cumulant les contributions des deux demi-motifs pour ce qui est des taux d'entaillement.

Chaque demi motif sculpture est découpée en trois portions (Z1, Z2, Z3). On mesure la largeur normale moyenne de chaque portion en prenant la distance normale entre les arêtes d'attaque et de fuite sans prendre en compte les chanfreins.

La moyenne des densités d'incision des motifs de sculpture (MA, MB, MC) sur un tour de roue est de 36 mm$^{-1}$. C'est la moyenne pondérée des densités d'incision de chacun des motifs de sculpture. Par exemple, la densité d'incision du le motif de sculpture MB est de 36 mm$^{-1}$.

Le taux d'entaillement surfacique est de 48.6 $\pm$0,02. Sa valeur augmente avec la présence des chanfreins sur les arêtes de fuite de 8% (avec les arêtes de fuite et d'attaque 15%). Dans ces conditions la performance est améliorée par l'effet de pression de contact sur les arêtes de fuite.

Le taux d'entaillement volumique est de 30.5% $\pm$0,004, ce qui permet de garantir une performance sur sol mouillé suffisant pour un pneumatique "toute saison". Le tableau qui suit résume les caractéristiques des chanfreins :

[Tableau 2]

| | Largeur chanfrein dans la portion de bord (Z1) mm | Largeur chanfrein dans la portion centre (Z3) mm | Largeur chanfrein dans la portion intermédiaire (Z2) mm |
|---|---|---|---|
| Motifs MA | 1.3 | 0.85 | 1.7 |
| Motifs MB | 1.5 | 1 | 2 |
| Motifs MC | 1.8 | 1.2 | 2.4 |

La largeur d'un chanfrein dans une portion (Z1, Z2, Z3) est la distance normale entre la face de fuite de la portion et l'arête du chanfrein appartenant à la surface de roulement.

La présence des chanfreins sur les bords d'attaque des motifs de sculpture, améliore l'adhérence sur neige d'environ 3 à 5 %.

La présence des chanfreins sur les bords d'attaque des motifs de sculpture est sans effets pénalisant sur le bruit de roulement qui reste conforme à la réglementation R117 de UNECE (Organisation des Nations Unies pour le Comité Economique Européen) avec un niveau en puissance acoustique rayonnée inférieur au seuil prévu par le règlement.

L'invention n'est pas limitée aux modes de réalisation et variantes présentées et d'autres modes de réalisation et variantes apparaîtront clairement à l'homme du métier sans sortir du cadre de l'invention définie par les revendications ci-jointes.

**Revendications**

**1.** Pneumatique comportant une bande de roulement (10), destinée à entrer en contact avec un sol par l'intermédiaire d'une surface de roulement (20) :

- la bande de roulement (10) comprenant des éléments en relief organisés en motifs de sculpture (MA, MB), séparés au moins en partie les uns des autres par des rainures (30) et s'étendant radialement vers l'extérieur à partir d'une surface de fond (40) jusqu'à la surface de roulement (20) sur une hauteur radiale H au moins égale à 6 mm et au plus égale à la hauteur radiale $H_{max}$ de la bande de roulement (10) ;

- chaque motif de sculpture (MA, MB) comprenant deux parties, appelées demi motifs (MA1, MA2 ) et ( MB1, MB2), symétriques par rapport au plan équatorial passant par le centre de la bande de roulement (C ), et décalées l'une par rapport à l'autre, dans la direction circonférentielle d'une distance D ;

- chaque demi motif (MA1, MB1) et leur symétrique respectif (MA2, MB2) étant incurvé, selon une direction axiale (YY'), depuis une extrémité axiale d'un bord (24G, 24D) de la bande de roulement jusqu'au centre (C) de la bande de roulement (10) de manière à définir un sens privilégié de roulage du pneumatique et ayant une largeur axiale L;

- chaque demi-motif (MA1, MB1 ; MA2, MB2) comprenant une première portion latérale (Z3) s'étendant à partir d'une extrémité axiale du bord de la bande de roulement (24G, 24D) sur une largeur axiale égale à au plus un tiers de la largeur axiale L du demi-motif, une deuxième portion centrale (Z 1) ayant la même largeur axiale que la première portion latérale (Z3), et une troisième portion intermédiaire (Z2) contigües aux deux autres portions ;

- chaque portion (Z1, Z2, Z3) de chaque demi motif (MA1, MB1 ; MA2, MB2) étant un élément volumique présentant une face d'attaque qui est la face dont l'arête radialement extérieure rentre la première dans l'aire de contact lors du passage du pneumatique sur un sol, ladite arête de la face d'attaque radialement extérieure étant ci-après désignée arête d'attaque ;

- chaque portion (Z1, Z2, Z3) de chaque demi-motif (MA1, MB1 ; MA2, MB2) ayant une face de fuite qui est la face dont l'arête radialement extérieure sort la dernière de l'aire de contact du pneumatique en roulage sur un sol, ladite arête de la face de fuite radialement extérieure étant ci-après désignée arête de fuite ;

- l'arête d'attaque de chaque portion (Z1, Z2, Z3) ayant respectivement un profil chanfreiné (51, 52, 53), avec des largeurs respectives des chanfreins $LC_1^A$, $LC_2^A$, $LC_3^A$ pour les demi motifs (MA1, MA2) d'un premier motif, et respectivement $LC_1^B$, $LC_2^B$, $LC_3^B$ pour les demi motifs (MB1, MB2) d'un deuxième motif ;

- la largeur d'un chanfrein dans une portion (Z1, Z2, Z3) étant la distance normale entre la face d'attaque de la portion et l'arête du chanfrein appartenant à la surface de roulement ;

- la bande de roulement étant obtenue par une distribution périodique dans la direction circonférentielle d'un premier motif de sculpture MA formé du demi motif (MA1), et de son symétrique (MA2) selon un pas PA, et d'un deuxième motif de sculpture MB formé du demi motif (MB1) et de son symétrique (MB2) MD2 selon un pas PB, avec PA<PB;

- une "incision" étant une découpure ou entaille dont la distance entre les parois de matière qui délimitent ladite incision est inférieure ou égale à 2 mm et dont la profondeur est supérieure ou égale à 1 mm, la densité d'incision des motifs de sculpture SD, correspondant au rapport entre une somme des longueurs projetées lpyi des incisions d'un motif de sculpture (MA, MB) selon une direction axiale (Y) sur le produit du pas PA, PB du motif de sculpture et de la largeur W de la bande de roulement, l'ensemble étant multiplié par 1000, tel que

$$\text{SDA} = \frac{\sum_{i=1}^{nay} lpyi}{PA*W} * 1000 \text{, et } \text{SDB} = \frac{\sum_{i=1}^{nby} lpyi}{PB*W} * 1000$$

avec nay, et nby le nombre d'incisions de chaque motif de sculpture (MA, MB), et lpyi la longueur projetée de la ième incision du motif considéré,

**caractérisé en ce que** dans la portion centrale (Z1) et/ou dans la portion intermédiaire (Z2), et/ou dans la portion latérale (Z3), les largeurs des chanfreins **des arêtes d'attaque** $LC_i^A$, $LC_i^B$ , i allant de 1, à 3, des demi-motifs (MA1, MA2) et (MB1, MB2) de pas respectifs PA, PB vérifient les inégalités suivantes :

a) pour la portion centrale (Z1) :

$$0.8 * \frac{PA}{PB} \leq \frac{LC_1^A}{LC_1^B} \leq \frac{PA}{PB} * 1.2$$

b) pour la portion intermédiaire (Z2) :

$$0.8 * \frac{PA}{PB} \leq \frac{LC_2^A}{LC_2^B} \leq \frac{PA}{PB} * 1.2$$

c) pour la portion latérale (Z3) :

$$0,8 * \frac{PA}{PB} \leq \frac{LC_3^A}{LC_3^B} \leq \frac{PA}{PB} * 1,2.$$

et **en ce que** la densité d'incision de chaque motif de sculpture SDA, SDB est au moins égale à 10 mm$^{-1}$, et au plus égale à 70 mm$^{-1}$.

**2.** Pneumatique selon la revendication 1, la bande de roulement comprenant un nombre NA, NB de motifs de sculpture (MA, MB), la densité moyenne d'incision, Sdmoy est au moins égale à 10mm$^{-1}$, et au plus égale à 70 mm$^{-1}$, avec la densité moyenne d'incision définie par :

$$Sdmoy = \frac{SDA*NA*PA+SDB*NB*PB}{NA*PA+NB*PB},$$

avec SDA,SDB densités d'incision des motifs de sculpture (MA, MB).

**3.** Pneumatique selon l'une des revendications précédentes de 1 à 2, **dans lequel** le rapport entre le pas PA du premier motif de sculpture MA formé des demi-motifs (MA1, MA2) divisé par le pas PB du deuxième motif de sculpture MB formé des demi-motifs (MB1, MB2), PA/PB est au moins égal à 0,60 et au plus égal à 0,90.

**4.** Pneumatique selon l'une quelconque des revendications de 1 à 3, **dans lequel** le rapport entre le pas PA du premier motif de sculpture MA formé des demi-motifs (MA1, MA2) divisé par le pas PB du deuxième motif de sculpture MB formé des demi motifs (MB1, MB2), PA/PB est au moins égal à 0,85.

**5.** Pneumatique selon l'une quelconque des revendications 1 à 4, **dans lequel** les largeurs des chanfreins des arêtes d'attaque $LC_1^A$, $LC_2^A$, $LC_3^A$ pour le premier motif de sculpture MA formé des demi motifs (MA1, MA2) et $LC_1^B$, $LC_2^B$, $LC_3^B$ pour le deuxième motif de sculpture MB formé des demi motifs (MB1, MB2) des portions respectives (Z1, Z2, Z3) vérifient au moins une des relations suivantes :

- $LC_1^X$ appartient à l'intervalle [0.5, 2] mm, avec X=A, ou B
- $LC_2^X$ appartient à l'intervalle [1, 2.5] mm, avec X= A ou B
- $LC_3^X$ appartient à l'intervalle [1.5, 3] mm, avec X=A, ou B

**6.** Pneumatique selon l'une quelconque des revendications 1 à 5, la bande de roulement comprenant un troisième motif de sculpture MC formé de deux demi-motifs de sculpture (MC1, MC2), symétriques par rapport au plan équatorial (C), et de pas PC, avec PB inférieur à PC, **dans lequel** le rapport des pas PB/PC est supérieur ou égal au rapport des pas PA/PB.

**7.** Pneumatique selon l'une quelconque des revendications 1 à 6, **dans lequel** les motifs de sculpture ont une hauteur radiale Hmax au plus égale à 9 mm et préférentiellement au plus égale à 7.0 mm.

**8.** Pneumatique selon l'une quelconque des revendications 1 à 7, le taux d'entaillement volumique global TEV correspondant au rapport du volume d'entaille VE sur le volume total VT de la bande de roulement, tel que TEV=VE/VT **dans lequel** le taux d'entaillement volumique global TEV de la bande de roulement est compris entre [20%,40%], et préférentiellement entre [25%,35%].

**9.** Pneumatique selon l'une quelconque des revendications 6 à 8, la bande de roulement comprenant un troisième motif de sculpture MC de pas PC **dans lequel** le taux d'entaillement volumique TEM de chaque motif de sculpture (MA, MB, MC) est sensiblement identique.

**10.** Pneumatique selon l'une quelconque des revendications 6 à 9, la bande de roulement comprenant un troisième motif de sculpture MC de pas PC **dans lequel** le pas maximal des motifs de sculpture parmi le pas PA du premier motif (MA), le pas PB du deuxième motif (MB) et le pas PC du troisième motif (MC) est compris entre 22 mm et 40 mm, préférentiellement entre 23 mm et 36 mm.

**11.** Pneumatique selon l'une quelconque des revendications 1 à 10, **dans lequel** la composition du matériau caoutchoutique de la bande de roulement a une température de transition vitreuse Tg comprise entre -40°C et -10°C et préférentiellement entre -35°C et - 15°C, la température de transition vitreuse étant déterminée selon la norme ASTM D 5992-96, et un module complexe de cisaillement dynamique G* mesuré à 60°C compris entre 0,5 MPa et 2 MPa, et préférentiellement entre 0,7 MPa et 1,5 MPa.

**12.** Pneumatique selon l'une quelconque des revendications 1 à 11, dans lequel au moins 30% des arêtes d'attaque et/ou de fuite et préférentiellement au moins 45% des arêtes d'attaque et/ou de fuite, et plus préférentiellement 100 % des arêtes d'attaque et/ou de fuite ont un chanfrein.

**13.** Pneumatique selon la revendication 6, la bande de roulement comprenant un nombre NA, NB, NC de motifs de sculpture (MA, MB, MC), la densité moyenne d'incision, SDmoy est au moins égale à 10mm⁻¹, et au plus égale à 70 mm⁻¹, avec la densité moyenne d'incision définie par :
$$\text{SDmoy} = \frac{SDA*NA*PA+SDB*NB*PB+SDC*NC*PC}{NA*PA+NB*PB+NC*PC}$$ ,
avec SDC définie comme étant la densité d'incision du motif MC de la sculpture.

**Patentansprüche**

**1.** Luftreifen, der einen Laufstreifen (10) aufweist, der dazu bestimmt ist, mittels einer Lauffläche (20) mit einem Boden in Kontakt zu kommen,:

- wobei der Laufstreifen (10) in Profilmustern (MA, MB) organisierte reliefartige Elemente enthält, die zumindest zum Teil durch Rillen (30) voneinander getrennt sind und sich ausgehend von einer Grundfläche (40) bis zur Lauffläche (20) über eine radiale Höhe H mindestens gleich 6 mm und höchsten gleich der radialen Höhe $H_{max}$ des Laufstreifens (10) radial nach außen erstrecken;
- wobei jedes Profilmuster (MA, MB) zwei Teile, Halbmuster (MA1, MA2) und (MB1, MB2) genannt, enthält, die symmetrisch bezüglich der durch die Mitte des Laufstreifens (C) verlaufenden Äquatorialebene und in der Umfangsrichtung um einen Abstand D zueinander versetzt sind;
- wobei jedes Halbmuster (MA1, MB1) und sein jeweiliges symmetrisches Abbild (MA2, MB2) gemäß einer axialen Richtung (YY') ausgehend von einem axialen Ende eines Rands (24G, 24D) des Laufstreifens bis zur Mitte (C) des Laufstreifens (10) gekrümmt sind, um eine bevorzugte Laufrichtung des Luftreifens zu definieren, und eine axiale Breite L haben;
- wobei jedes Halbmuster (MA1, MB1; MA2, MB2) einen ersten Seitenabschnitt (Z3), der sich ausgehend von einem axialen Ende des Rands des Laufstreifens (24G, 24D) über eine axiale Breite gleich höchstens einem Drittel der axialen Breite L des Halbmusters erstreckt, einen zweiten Mittelabschnitt (Z1) mit der gleichen axialen Breite wie der erste Seitenabschnitt (Z3) und einen dritten Zwischenabschnitt (Z2) enthält, der an die zwei anderen Abschnitte angrenzt;
- wobei jeder Abschnitt (Z1, Z2, Z3) jedes Halbmusters (MA1, MB1; MA2, MB2) ein Volumenelement ist, das eine Vorderseite aufweist, die die Seite ist, deren radial äußere Kante beim Durchlauf des Luftreifens auf einem Boden zuerst in den Kontaktbereich eintritt, wobei die radial äußere Kante der Vorderseite nachfolgend als Vorderkante bezeichnet wird;
- wobei jeder Abschnitt (Z1, Z2, Z3) jedes Halbmusters (MA1, MB1; MA2, MB2) eine Hinterseite hat, die die Seite ist, deren radial äußere Kante beim Rollen auf einem Boden als letzte aus dem Kontaktbereich des Luftreifens austritt, wobei die radial äußere Kante der Hinterseite nachfolgend als Hinterkante bezeichnet wird;
- wobei die Vorderkante jedes Abschnitts (Z1, Z2, Z3) ein abgeschrägtes Profil (51, 52, 53) mit Breiten der Abschrägungen $LC_1^A,\ LC_2^A, LC_3^A$ für die Halbmuster (MA1, MA2) eines ersten Musters bzw. $LC_1^B,\ LC_2^B, LC_3^B$ für die Halbmuster (MB1, MB2) eines zweiten Musters hat;
- wobei die Breite einer Abschrägung in einem Abschnitt (Z1, Z2, Z3) der normale Abstand zwischen der Vorderseite des Abschnitts und der Kante der zur Lauffläche gehörenden Abschrägung ist;
- wobei der Laufstreifen durch eine periodische Verteilung in der Umfangsrichtung eines ersten Profilmusters MA geformt vom Halbmuster (MA1) und seinem symmetrischen Abbild (MA2) gemäß einer Teilung PA, und eines zweiten Profilmusters MB geformt vom Halbmuster (MB1) und seinem symmetrischen Abbild (MB2) gemäß einer Teilung PB erhalten wird, mit PA<PB;
- wobei ein "Einschnitt" ein Ausschnitt oder Kerbe ist, dessen Abstand zwischen den Materialwänden, die den Einschnitt begrenzen, kleiner als oder gleich 2 mm ist,
und und dessen Tiefe größer als oder gleich 1 mm ist, wobei die Einschnittdichte der Profilmuster SD, entsprechend dem Verhältnis zwischen einer Summe der projizierten Längen Ipyi der Einschnitte eines Profilmusters (MA, MB) gemäß einer axialen Richtung (Y) zum Produkt der Teilung PA, PB des Profilmusters und der Breite W des Laufstreifens ist, wobei die Einheit mit 1000 multipliziert wird, derart, dass $SDA = \frac{\sum_{i=1}^{nay} lpyi}{PA*W} * 1000$,

und $SDB = \frac{\sum_{i=1}^{nby} lpyi}{PB*W} * 1000$, mit nay und nby der Anzahl von Einschnitten jedes Profilmusters (MA, MB), und lpyi der projizierten Länge des i-ten Einschnitts des betrachteten Musters,

**dadurch gekennzeichnet, dass** im Mittelabschnitt (Z1) und/oder im Zwischenabschnitt (Z2) und/oder im Seitenabschnitt (Z3) die Breiten der Abschrägungen der Vorderkanten $LC_1^A$, $LC_1^B$, mit i von 1 bis 3, der Halbmuster (MA1, MA2) und (MB1, MB2) mit jeweiligen Teilungen PA, PB die folgenden Ungleichheiten erfüllen

a) für den Mittelabschnitt (Z1):

$$0{,}8 * \frac{PA}{PB} \leq \frac{LC_i^A}{LC_i^B} \leq \frac{PA}{PB} * 1{,}2$$

b) für den Zwischenabschnitt (Z2):

$$0{,}8 * \frac{PA}{PB} \leq \frac{LC_2^A}{LC_2^B} \leq \frac{PA}{PB} * 1{,}2$$

c) für den Seitenabschnitt (Z3):

$$0{,}8 * \frac{PA}{PB} \leq \frac{LC_3^A}{LC_3^B} \leq \frac{PA}{PB} * 1{,}2$$

und dass die Einschnittdichte jedes Profilmusters SDA, SDB mindestens gleich 10 mm$^{-1}$ und höchstens gleich 70$^{-1}$ mm ist.

**2.** Luftreifen nach Anspruch 1, wobei der Laufstreifen eine Anzahl NA, NB von Profilmustern (MA, MB) enthält, wobei die mittlere Einschnittdichte Sdmoy mindestens gleich 10mm$^{-1}$ und höchstens gleich 70 mm$^{-1}$ ist, mit der mittleren Einschnittdichte definiert durch:

$$SDmoy = \frac{SDA * NA * PA + SDB * NB * PB}{NA * PA + NB * PB}$$

mit SDA, SDB Einschnittdichten der Profilmuster (MA, MB).

**3.** Luftreifen nach einem der vorhergehenden Ansprüche 1 bis 2, wobei das Verhältnis zwischen der Teilung PA des ersten Profilmusters MA geformt von den Halbmustern (MA1, MA2) dividiert durch die Teilung PB des zweiten Profilmusters MB geformt von den Halbmustern (MB1, MB2), PA/PB mindestens gleich 0,60 und höchstens gleich 0,90 ist.

**4.** Luftreifen nach einem der Ansprüche 1 bis 3, wobei das Verhältnis zwischen der Teilung PA des ersten Profilmusters MA geformt von den Halbmustern (MA1, MA2) dividiert durch die Teilung PB des zweiten Profilmusters MB geformt von den Halbmustern (MB1, MB2), PA/PB mindestens gleich 0,85 ist.

**5.** Luftreifen nach einem der Ansprüche 1 bis 4, wobei die Breiten der Abschrägungen der Vorderkanten $LC_1^A$, $LC_2^A, LC_3^A$ für das erste Profilmuster MA geformt von den Halbmustern (MA1, MA2) und $LC_1^B$, $LC_2^B, LC_3^B$ für das zweite Profilmuster MB geformt von den Halbmustern (MB1, MB2) der Abschnitte (Z1, Z2, Z3) mindestens eine der folgenden Beziehungen erfüllen:

- $LC_1^X$ gehört zum Intervall [0.5, 2] mm, mit X=A, oder B

- $LC_2^X$ gehört zum Intervall [l, 2.5] mm, mit X= A oder B

- $LC_3^X$ gehört zum Intervall [1.5, 3] mm, mit X=A, oder B.

6. Luftreifen nach einem der Ansprüche 1 bis 5, wobei der Laufstreifen ein drittes Profilmuster MC geformt von zwei Halb-Profilmustern (MC1, MC2), symmetrisch bezüglich der Äquatorialebene (C) und mit einer Teilung PC enthält, mit PB kleiner als PC, wobei das Verhältnis der Teilungen PB/PC größer als das oder gleich dem Verhältnis der Teilungen PA/PB ist.

7. Luftreifen nach einem der Ansprüche 1 bis 6, wobei die Profilmuster eine radiale Höhe Hmax höchstens gleich 9 mm und vorzugsweise höchstens gleich 7.0 mm haben.

8. Luftreifen nach einem der Ansprüche 1 bis 7, wobei der globale volumenbezogene Negativprofilanteil TEV dem Verhältnis des Einschnittvolumens VE zum Gesamtvolumen VT des Laufstreifens entspricht, derart, dass TEV=VE/VT, wobei der globale volumenbezogene Negativprofilanteil TEV des Laufstreifens zwischen [20%,40%], und vorzugsweise zwischen [25%,35%] liegt.

9. Luftreifen nach einem der Ansprüche 6 bis 8, wobei der Laufstreifen ein drittes Profilmuster MC einer Teilung PC enthält, wobei der volumenbezogene Negativprofilanteil TEM jedes Profilmusters (MA, MB, MC) im Wesentlichen gleich ist.

10. Luftreifen nach einem der Ansprüche 6 bis 9, wobei der Laufstreifen ein drittes Profilmuster MC einer Teilung PC enthält, wobei die maximale Teilung der Profilmuster unter der Teilung PA des ersten Musters (MA), der Teilung PB des zweiten Musters (MB) und der Teilung PC des dritten Musters (MC) zwischen 22 mm und 40 mm, vorzugsweise zwischen 23 mm und 36 mm liegt.

11. Luftreifen nach einem der Ansprüche 1 bis 10, wobei die Zusammensetzung des Kautschukmaterials des Laufstreifens eine Glasübergangstemperatur Tg zwischen - 40°C und -10°C und vorzugsweise zwischen -35°C et -15°C hat, wobei die Glasübergangstemperatur gemäß der Norm ASTM D 5992-96 bestimmt wird, und einen komplexen dynamischen Schermodul G* gemessen bei 60°C zwischen 0,5 MPa und 2 MPa, und vorzugsweise zwischen 0,7 MPa und 1,5 MPa hat.

12. Luftreifen nach einem der Ansprüche 1 bis 11, wobei mindestens 30% der Vorder- und/oder Hinterkanten und vorzugsweise mindestens 45% der Vorder- und/oder Hinterkanten und noch bevorzugter 100% der Vorder- und/oder Hinterkanten eine Abschrägung haben.

13. Luftreifen nach Anspruch 6, wobei der Laufstreifen eine Anzahl NA, NB, NC von Profilmustern (MA, MB, MC) enthält, wobei die mittlere Einschnittdichte SDmoy mindestens gleich 10mm$^{-1}$ und höchstens gleich 70 mm$^{-1}$ ist, mit der mittleren Einschnittdichte definiert durch:

$$SDmoy = \frac{SDA * NA * PA + SDB * NB * PB + SDC * NC * PC}{NA * PA + NB * PB + NC * PC}$$

mit SDC definiert als die Einschnittdichte des Musters MC des Profils.

**Claims**

1. Tyre having a tread (10) intended to come into contact with a ground via a tread surface (20):

    - the tread (10) comprising raised elements that are organized in tread pattern elements (MA, MB), are separated from one another at least in part by grooves (30) and extend radially towards the outside from a bottom surface (40) as far as the tread surface (20) over a radial height H at least equal to 6 mm and at most equal to the radial

height $H_{max}$ of the tread (10);

- each tread pattern element (MA, MB) comprising two parts, known as half-elements (MA1, MA2) and (MB1, MB2), which are symmetric with respect to the equatorial plane passing through the centre of the tread (C) and are offset from one another in the circumferential direction by a distance D;

- each half-element (MA1, MB1) and their respective symmetric counterpart (MA2, MB2) being curved, in an axial direction (YY'), from an axial end of one edge (24G, 24D) of the tread to the centre (C) of the tread (10) so as to defined a preferred direction of running of the tyre, and having an axial width L;

- each half-element (MA1, MB1; MA2, MB2) comprising a first, lateral portion (Z3) extending from an axial end of the edge (24G, 24D) of the tread over an axial width equal to at most one third of the axial width L of the half-element, a second, central portion (Z1) having the same axial width as the first, lateral portion (Z3), and a third, intermediate portion (Z2) contiguous with the two other portions;

- each portion (Z1, Z2, Z3) of each half-element (MA1, MB1; MA2, MB2) being a volumetric element having a leading face, which is the face of which the radially outer edge corner is the first to enter the contact patch in which the tyre is in contact with the ground, said edge corner of the radially outer leading face being known as the leading edge corner below;

- each portion (Z1, Z2, Z3) of each half-element (MA1, MB1; MA2, MB2) having a trailing face, which is the face of which the radially outer edge corner is the last to leave the contact patch in which the tyre is in contact with the ground, said edge corner of the radially outer trailing face being known as the trailing edge corner below;

- the leading edge corners of each portion (Z1, Z2, Z3) respectively having a chamfered profile (51, 52, 53), with respective widths of the chamfers $LC_1^A, LC_2^A, LC_3^A$ for the half-elements (MA1, MA2) of a first element and, respectively, $LC_1^B, LC_2^B, LC_3^B$ for the half-elements (MB 1, MB2) of a second element;

- the width of a chamfer in a portion (Z1, Z2, Z3) being the normal distance between the leading face of the portion and the edge corner of the chamfer belonging to the tread surface;

- the tread being obtained through a periodic distribution in the circumferential direction of a first tread pattern element MA formed of the first half element (MA1) and of its symmetric counterpart (MA2) at a pitch PA, and of a second tread pattern element MB formed of the second half element (MB1) and of its symmetric counterpart (MB2) at a pitch PB, where PA<PB;

- a "sipe" being a cut or void in which the distance between the walls of material that delimit said sipe is less than or equal to 2 mm and the depth of which is greater than or equal to 1 mm, the sipes density of the tread pattern elements SD corresponding to the ratio between the sum of the projected lengths lpyi of the sipes of a tread pattern element (MA, MB) along an axial direction (Y) to the product of the pitch PA, PB of the tread pattern element and the width W of the tread, the whole being multiplied by 1000, such that $\mathrm{SDA} = \frac{\sum_{i=1}^{nay} lpyi}{\mathrm{PA} * \mathrm{W}} * 1000,$

and $\mathrm{SDB} = \frac{\sum_{i=1}^{nby} lpyi}{\mathrm{PB} * \mathrm{W}} * 1000$ where nay and nby are the number of sipes of each tread pattern element (MA, MB) and lpyi is the projected length of the i-th sipe of the element in question,

**characterized in that,** in the central portions (Z1) and/or the intermediate portion (Z2), and/or the lateral portion Z3, the widths of the chamfers of the leading edge corners $LC_i^A$, $LC_i^B$, *i ranging from 1 to* 3 of the half-elements (MA1, MA2) and (MB1, MB2) with respective pitches PA, PB satisfy the following inequalities:

a) for the central portion (Z1):

$$0.8 * \frac{PA}{PB} \leq \frac{LC_1^A}{LC_1^B} \leq \frac{PA}{PB} * 1.2$$

b) for the intermediate portion (Z2):

$$0.8 * \frac{PA}{PB} \leq \frac{LC_2^A}{LC_2^B} \leq \frac{PA}{PB} * 1.2$$

c) for the lateral portion (Z3):

$$0,8 * \frac{PA}{PB} \leq \frac{LC_3^A}{LC_3^B} \leq \frac{PA}{PB} * 1,2;$$

**and in that** the sipes density of each tread pattern element SDA, SDB is at least equal to 10 mm$^{-1}$ and at most equal to 70 mm$^{-1}$.

2. Tyre according to Claim 1, the tread comprising a number NA, NB of tread pattern elements (MA, MB), the average sipes density SDmoy being at least equal to 10 mm$^{-1}$ and at most equal to 70 mm$^{-1}$, with the average sipes density being defined by:

$$SDmoy = \frac{SDA*NA*PA + SDB*NB*PB}{NA*PA + NB*PB}$$, where SDA, SDB are sipe densities of the tread pattern elements (MA, MB).

3. Tyre according to either of the preceding Claims 1 and 2, wherein the ratio between the pitch PA of the first tread pattern element MA formed of the half-elements (MA1, MA2) divided by the pitch PB of the second tread pattern element MB formed of the half-elements (MB1, MB2), PA/PB, is at least equal to 0.60 and at most equal to 0.90.

4. Tyre according to any one of Claims 1 to 3, wherein the ratio between the pitch PA of the first tread pattern element MA formed of the half-elements (MA1, MA2) divided by the pitch PB of the second tread pattern element MB formed of the half-elements (MB1, MB2), PA/PB, is at least equal to 0.85.

5. Tyre according to any one of Claims 1 to 4, **wherein** the widths of the chamfers of the leading edge corners $LC_1^A, LC_2^A, LC_3^A$ for the first tread pattern element MA formed of the half-elements (MA1, MA2) and $LC_1^B, LC_2^B, LC_3^B$ for the second tread pattern element MB formed of the second half-elements (MB1, MB2) of the respective portions (Z1, Z2, Z3) satisfy at least one of the following relationships:

   - $LC_1^X$ belongs to the range [0.5, 2] mm, where X=A, or B
   - $LC_2^X$ belongs to the range [1, 2.5] mm, where X=A or B
   - $LC_3^X$ belongs to the range [1.5, 3] mm, where X=A, or B.

6. Tyre according to any one of Claims 1 to 5, the tread comprising a third tread pattern element MC formed of two tread pattern half-elements (MC1, MC2) that are symmetric with respect to the equatorial plane (C), with a pitch PC, where PB is smaller than PC, **wherein** the ratio of the pitches PB/PC is greater than or equal to the ratio of the pitches PA/PB.

7. Tread according to any one of Claims 1 to 6, **wherein** the tread pattern elements have a radial height Hmax at most equal to 9 mm and preferably at most equal to 7.0 mm.

8. Tyre according to any one of Claims 1 to 7, the overall volumetric void ratio TEV corresponding to the ratio of the void volume VE to the total volume VT of the tread, such that TEV=VE/VT, **wherein** the volumetric void ratio TEV of the tread is between [20%,40%], and preferably between [25%,35%].

9. Tyre according to any one of Claims 6 to 8, the tread comprising a third tread pattern element MC with a pitch PC, **wherein** the volumetric void ratio TEM of each tread pattern element (MA, MB, MC) is more or less identical.

10. Tyre according to any one of Claims 6 to 9, the tread comprising a third tread pattern element MC with a pitch PC, **wherein** the maximum pitch of the tread pattern elements out of the pitch PA of the first element (MA), the pitch PB of the second element (MB) and the pitch PC of the third element (MC) is between 22 mm and 40 mm, preferably between 23 mm and 36 mm.

**11.** Tyre according to any one of Claims 1 to 10, **wherein** the composition of the rubbery material of the tread has a glass transition temperature Tg of between -40°C and -10°C and preferably between -35°C and -15°C, the glass transition temperature being measured according standard ASTM D5992-96, and a complex dynamic shear modulus G* measured at 60°C of between 0.5 MPa and 2 MPa, and preferably between 0.7 MPa and 1.5 MPa.

**12.** Tyre according to any one of Claims 1 to 11, wherein at least 30% of the leading and/or trailing edge corners and preferably at least 45% of the leading and/or trailing edge corners, and more preferably 100% of the leading and/or trailing edge corners have a chamfer.

**13.** Tyre according to Claim 6, the tread comprising a number NA, NB, NC of tread pattern elements (MA, MB, MC), the average sipes density SDmoy being at least equal to 10 mm$^{-1}$ and at most equal to 70 mm$^{-1}$, with the average sipes density being defined by:

$$SDmoy = \frac{SDA*NA*PA + SDB*NB*PB + SDC*NC*PC}{NA*PA + NB*PB + NC*PC}$$

, where SDC is defined as being the sipes density of the element MC of the tread pattern.

MA1

Z1

C

52

Z2

G

51

53

Z3

G

25

F

E

F

60

E

80

24G

X

Y

Figure 1-A

$LC_3^A$   20

$LC_2^A$   20

$LC_1^A$   20

53

52

51

22

22

22

Coupure E-E

Coupure F-F

Coupure G-G

Z

X

Figure 1

MA

C

51   $LC_1^A$

X

52   $LC_2^A$

D

Y

53   $LC_3^A$

80

60

MA1

MA1

MA — $\begin{cases} MA1 \\ MA2 \end{cases}$

MA2

60

Figure 2

Figure 3

Figure 4

Figure 5

Figure 6

MA1

24G

MA2

80

30

24D

W

Figure 7

Lpy1

Lpy2

53

52

51

24G

MA1

MA2

24D

W

X

Y

Figure 8

**EP 4 126 566 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016134988 A
- WO 2019123277 A
- WO 2016134991 A1